# EUROPEAN PATENT SPECIFICATION

(11) **EP 0 431 899 B1**
(45) Date of publication and mention of the grant of the patent: **08.11.1995**
(21) Application number: 90313163.9
(22) Date of filing: 04.12.1990
(51) Int. Cl.: G11B 23/087, G11B 15/61

(54) **Magnetic tape cassettes**
Magnetbandkassetten
Cassettes à bande magnétique

(30) Priority: 06.12.1989 JP 317026/89; 06.12.1989 JP 317027/89; 06.12.1989 JP 317028/89; 06.12.1989 JP 317029/89; 06.12.1989 JP 141175/89 U; 19.10.1990 JP 280786/90
(43) Date of publication of application: 12.06.1991
(73) Proprietor: SONY CORPORATION, Tokyo 141 (JP)
(72) Inventor: Tanaka, Masato, c/o Patents Division, Shinagawa-ku, Tokyo 141 (JP); Yanaka, Kiyotaka, c/o Patents Division, Shinagawa-ku, Tokyo 141 (JP)
(74) Representative: Cotter, Ivan John

(56) References cited:
- EP-A- 0 022 651
- CH-A- 658 330
- FR-A- 2 495 367
- US-A- 3 766 328
- US-A- 4 213 162
- PATENT ABSTRACTS OF JAPAN vol. 13, no. 294 (P-894)(3642) 7 July 1989 & JP-A-1 073584 ( SONY CORP. )
- PATENT ABSTRACTS OF JAPAN vol. 6, no. 162 (P-137)(1040) 25 August 1982 & JP-A-57 078 670 ( HITACHI SEISAKUSHO K.K. ) 17 May 1982

## Description

This invention relates to magnetic tape cassettes.

In order to miniaturize a helical scan type recording and reproducing apparatus, a magnetic tape cassette has been proposed in which one portion of a head drum having a rotary head is inserted into a front opening of the cassette casing, and a tape-like record medium, for example a magnetic tape, housed in the cassette casing is brought into slidable contact with the peripheral surface of the head drum.

In this tape cassette, a tape guide having a recess formed at a front surface thereof is provided inside the front opening of the cassette casing, and the head drum is received by this recess. Also, the magnetic tape is guided and helically wrapped around the head drum by inclined guides having opposite inclination angles formed at left and right sides of the recess, whereby the rotary head on the head drum obliquely scans the magnetic tape, thereby to perform the recording and/or reproduction in a helical scan fashion.

Japanese laid-open patent specification 64/73584 describes another proposal for a magnetic tape cassette, in which the tape guides having the inclined guides are moulded independently of the cassette casing, and are assembled inside the opening of the cassette casing.

In this tape cassette, the tape guides provided inside the front surface side opening of the cassette casing are moulded integrally with a cassette shell which forms the cassette casing. Also, even in the magnetic tape cassette in which the tape guides are moulded independently of the cassette casing as described in Japanese patent specification 64/73584, the tape guides must be secured to the cassette shell.

More particularly, the independently moulded tape guides are assembled in the inside of the opening portion of one cassette shell (lower half) such that their central portions are engaged with central pins, and two side portions thereof are engaged with restriction surfaces or engaging pins. Thus, the tape guides are assembled in the inside of the opening of the cassette casing so that they cannot move.

There is then a risk that the head drum inserted into the opening of the tape cassette cannot be received by the tape guides satisfactorily. Then, since the tape guides are secured to the cassette casing, the tape cassette is not correctly loaded onto the recording and reproducing apparatus. Moreover, if the head drum is not precisely inclined, then even when the head drum is inserted into the opening of the cassette casing. the head drum does not come into contact with the tape guides correctly. so that the magnetic tape is brought into contact with the peripheral surface of the head drum unstably, causing problems in recording and/or reproduction.

Patent Specification US-A-3 766 328 discloses a repetitive tape playing system wherein a playing head is received in a recess in a cartridge which contains tape stored on reels, tape guide means in the form of non-rotatable pins or rods being provided mounted on leaf springs and guided by bifurcated members being provided to guide the tape over an arcuate guide surface of the cartridge.

According to the invention there is provided a magnetic tape cassette in which an opening is formed on the front surface side of a cassette casing into which a head drum can be inserted, a tape-like record medium wound around reel hubs and housed in the cassette casing is helically wrapped around the head drum when it is inserted into the opening, and helical scan recording and/or reproduction is performed by a rotary head mounted on the head drum. the magnetic tape cassette comprising a pair of tape guide members independently provided inside the opening of the cassette casing to guide the record medium such that the record medium is helically wrapped around the head drum;
characterised in that the pair of tape guide members are rotatably mounted on the cassette casing, have curved protruded supporting edge portions which come into circumferential contact with the head drum upon insertion of the head drum into the opening, and can be swung and moved in the lateral direction.

Since the pair of tape guide members which guide the tape-like record medium so that the record medium is helically wrapped around the head drum are provided inside the opening portion, so as to be able to swing independently, when the head drum is inserted into the opening portion, the two tape guide members are brought into circumferential contact with the surface of the head drum accurately and recording and/or reproduction can be reliably carried out.

The invention will now be described by way of example with reference to the accompanying drawings, throughout which like parts are referred to by like references, and in which:
Figure 1 is a fragmentary plan view of a portion of an embodiment of magnetic tape cassette according to the present invention;
Figure 2 is a cross-sectional view on the line A-A of Figure 1;
Figure 3 is a cross-sectional view on the line B-B of Figure 1;
Figure 4 is a perspective view of a tape guide member used in the embodiment;
Figure 5 is a perspective view of the embodiment;
Figure 6 is a perspective view of the embodiment and a head drum;
Figure 7 is a front view of the embodiment with a lid thereof opened;
Figure 8 is a plan view of the inside portion of the upper part of the embodiment;
Figure 9 is a plan view of the lower part of the embodiment;
Figure 10 is a fragmentary plan view of the lower part with a head drum inserted into the lower part;
Figure 11 is a perspective view of a braking mechanism of the embodiment;
Figure 12 is a plan view of the embodiment showing the reel hubs released from being locked by the braking mechanism;
Figures 13A and 13B are cross-sectional views used to explain the operation;
Figure 14 is a cross-sectional view of a reel hub used in the embodiment;
Figure 15 is a perspective view of a protective plug of a mis-erase preventing mechanism;
Figure 16 is a diagrammatic view of a section showing the mis-erase preventing mechanism from the front side thereof;
Figure 17 is a cross-sectional view on the line C-C of Figure 16;
Figure 18 is a cross-sectional view of a cassette magazine;
Figure 19 is a schematic diagram showing an outline of a cassette changer system; and
Figure 20 is a schematic diagram showing how to take a magnetic tape cassette out of the cassette magazine.

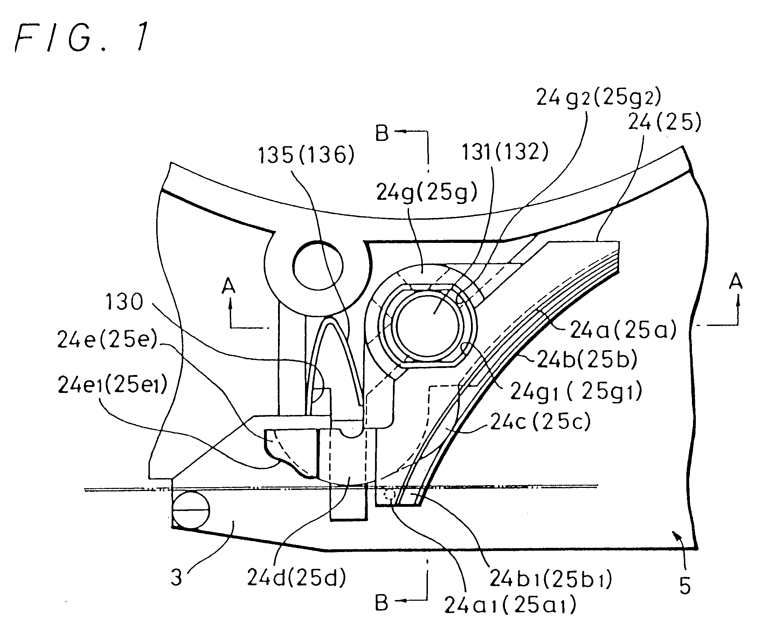

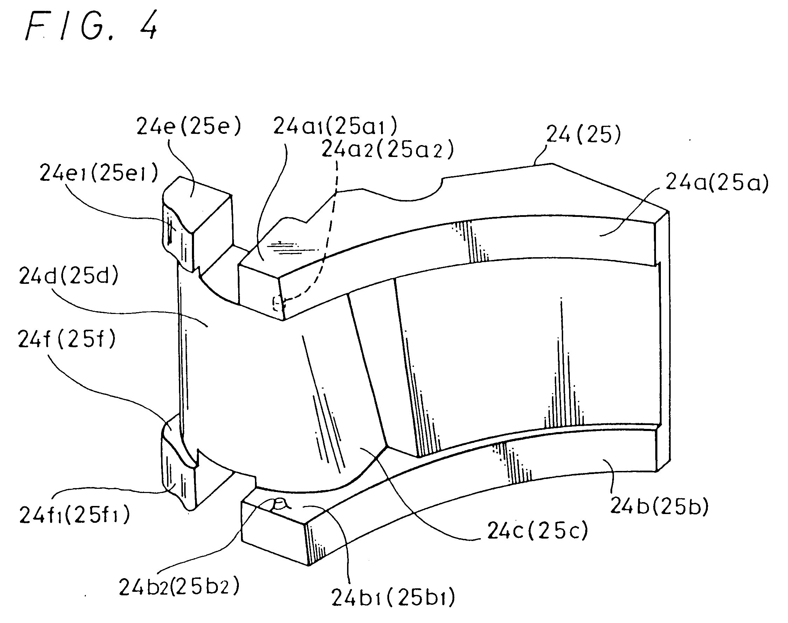

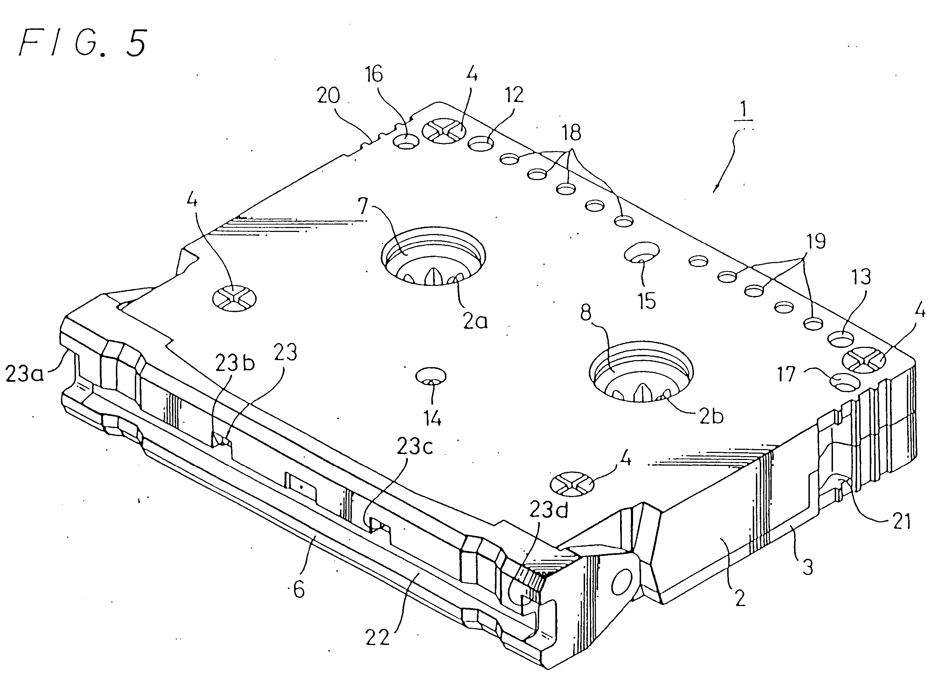

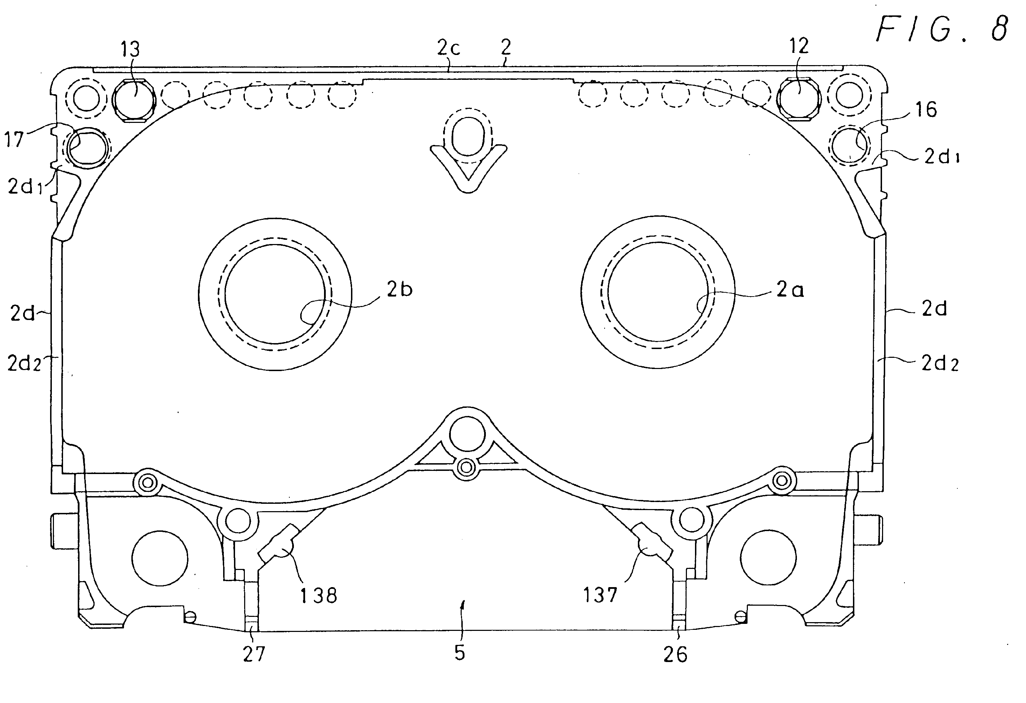

An embodiment of magnetic tape cassette to which the present invention is applied will be explained with reference to Figure 1 to 10. The magnetic tape cassette of this embodiment is an extremely small magnetic tape cassette.

The tape cassette comprises a cassette casing 1 which accommodates therein a magnetic tape T on and from which, for example, a pulse code modulated (PCM) signal is recorded and reproduced. The cassette casing 1 is formed by fastening an upper half or upper part 2 and a lower half or lower part 3 by screws 4, and a lid 6 is rotatably supported on the cassette casing 1 so as to open and close an opening 5 formed on the front surface sides of both the upper and lower parts 2 and 3.

The tape T is accommodated within the cassette casing 1, that is between the upper and lower parts 2 and 3, with the tape T wound around a pair of reel hubs 7 and 8 provided in correspondence with hub drive shaft insertion apparatus 2a, 2b and 3a, 3b. One portion of the tape T is exposed to the front surface opening 5 when the tape T is extended between pinch rollers 9 and 10 serving as guide rollers and pivotally supported on respective sides of the opening 5.

A braking mechanism 11 is provided within the cassette casing 1 to brake the two reel hubs 7 and 8 when the tape cassette is not in use. Mis-erase preventing mechanisms 12 and 13 are provided at the upper and lower surface sides of the cassette casing 1 at its two rear corner portions so as to communicate with the upper and lower parts 2 and 3. Positioning reference apertures 14, 15 and 16, 17 are formed through the cassette casing 1 at its central front and back portions in the front to back direction and at its two rear side portions in the lateral direction. A plurality of predetermined detection apertures 18 and 19 are formed through the cassette casing 1 at its rear edge portion in the lateral direction. Grip portions 20 and 21 are formed on the rear portions of two side walls of the cassette casing 1.

A cassette changer engaging portion 23 (23a, 23b, 23c and 23d) is formed along a guide groove 22 extending along the width direction of the lid 6 which opens and closes the opening 5 of the cassette casing 1.

In the magnetic tape cassette thus arranged, the tape T is recorded and/or reproduced by a rotary head in a helical scan fashion.

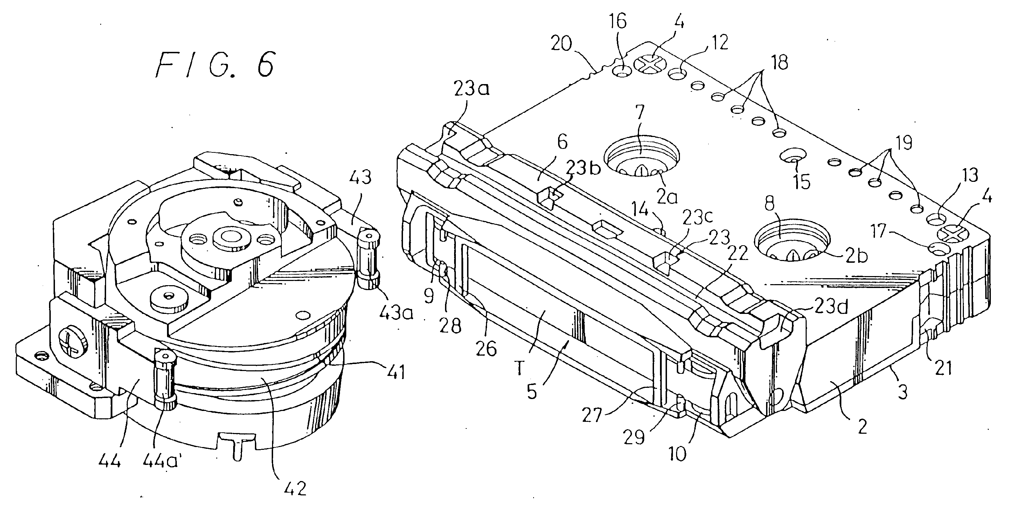

More specifically, as shown in Figure 6, a rotary head 41 is rotated at a predetermined slant angle relative to a head drum 42, and the head drum 42 is partly inserted into the opening 5 which is opened by rotating the lid 6 in the upper or lower direction. The tape T extended across the opening 5 is slidably moved so as to be wound around the insertion side peripheral surface of the head drum 42. Thus, when the rotary head 41 is rotated, oblique tracks are formed across the tape T.

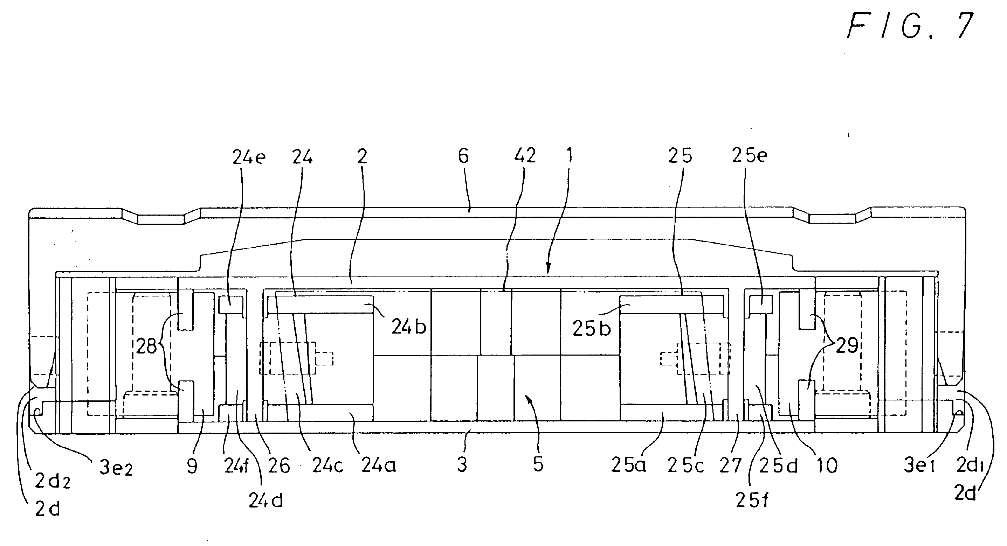

In this embodiment, in order to ensure that the tape T is brought into sliding contact with the head drum 42 in a helical scan fashion, as shown in Figures 7, 9 and 10, a pair of tape guide members 24 and 25 whose guide portions are inclined in opposite directions are disposed in the insertion portion of the opening 5 of the cassette casing 1 for the head drum 42 at positions inside the guide rollers 9 and 10, such that the tape guide members 24 and 25 can be oscillated and moved in the lateral direction in an opposing fashion. When the head drum 42 is inserted into the opening 5, the tape guide members 24 and 25 come into contact with the peripheral surface of the head drum 42, and guide the tape T such that it is sandwiched between them and the peripheral surface of the head drum 42.

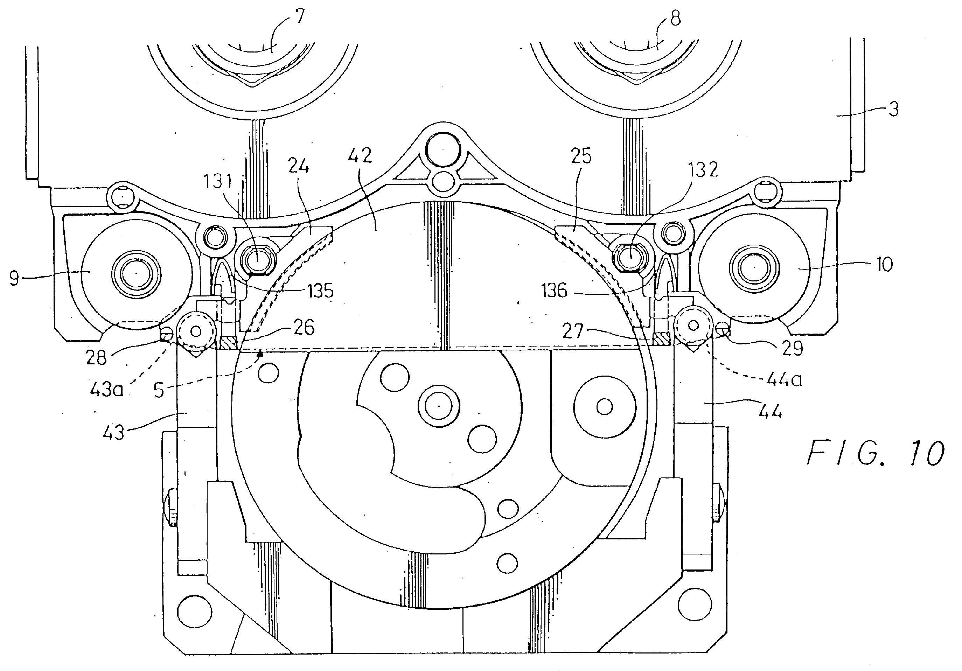

Moreover, as shown in Figures 6 and 10, the head drum 42 has formed at respective side portions wing guides 43 and 44 which are inserted between the pinch rollers 9 and 10 and the tape guide members 24 and 25 each side of the opening 5. Rollers 43a and 44a are mounted on the front end portions of the two wing guides 43 and 44, and brought into sliding contact with the tape T, urging the tape T against the tape guide members 24 and 25.

The wing guides 43 and 44 are inserted into the opening 5 of the cassette casing 1 such that they are located between supporting members 26 and 27 provided near the inside of the opening 5, and tape projection preventing guide protrusions 28 and 29 positioned between the supporting members 26 and 27 and the pinch rollers 9 and 10.

The tape guide members 24 and 25 provided at the opening 5 of the cassette casing 1 will be described more fully with reference to Figures 1 to 4.

As illustrated, the tape guide members 24 and 25 are symmetrically disposed at respective sides of the opening 5, and the guide portions thereof are inclined in opposite directions.

Inner surfaces of the two tape guide members 24 and 25 are formed as inclined surfaces of arcuate configuration of diameters smaller than the diameter of the head drum 42, and are inclined in the opposite direction in the up and down direction. Protruded supporting edge portions 24a, 24b and 25a, 25b are formed on the upper and lower portions of the inclined inner surfaces of the tape guide members 24 and 25 at a spacing slightly wider than the width of the tape T. Inclined guide surfaces 24c and 25c are formed between the portions 24a, 24b and 25a , 25b. Vertical columnar guide surfaces 24d and 25d are formed on the front surface continued to the guide surfaces 24c and 25c. Front edge portions of the edge portions 24a, 24b and 25a, 25b are slightly extended forward from the columnar guide surfaces 24d and 25d to form receiving edge portions 24a1, 24b1 and 25a1, 25b1, and engaging protrusions 24a2, 24b2 and 25a2, 25b2 are formed on the upper and lower opposing faces of the receiving edge portions 24a1, 24b1 and 25a1, 25b1. Pressing edge portions 24e, 24f and 25e, 25f are formed on the upper and lower portions of the outer ends of the columnar guide surfaces 24d and 25d in association with the receiving edge portions 24a1, 24b1 and 25a1, 25b1, respectively. Concave portions 24e1, 24f1 and 25e1, 25f1 are formed on the front surfaces of the pressing edge portions 24e, 24f and 25e, 25f, respectively.

Bearing brackets 24g and 25g protrude from the tape guide members 24 and 25 at their outer surface side of the guide surfaces 24c and 25c. Shaft apertures 25g1 and 25g1 of the bearing brackets 24g and 25g are shaped as rectangular apertures long in the lateral direction and protruded columnar support edges 24g2 and 25g2 are formed on the inner peripheral surfaces of the shaft apertures 24g1 and 25g1 at substantially the centres thereof.

In the thus constructed tape guide members 24 and 25, the bearing brackets 24g and 25g are inserted at the shaft apertures 24g1 and 25g1 into shafts 131 and 132 protruded at the opening 5 of the cassette casing 1, that is, at two side portions of the front opening portion of the front wall of the lower part 3, and the lower surface sides of the tape guide members 24 and 25 are placed on holding members 133 and 134 formed around the base portions of the shafts 131 and 132, whereby the lower surface sides of the tape guide members 24 and 25 are supported such that they are floated from the inner surface of the lower part 3 with a predetermined spacing. Therefore, the tape guide members 24 and 25 can be rotated relative to the shafts 131 and 132, and can also be inclined in the lateral direction, or swung about connecting points between the columnar support edges 24g2 and 25g2 of the shaft apertures 24g1 and 25g1 and the shafts 131 and 132. The tape guide members 24 and 25 can also be moved in the lateral direction by the oblong shaft apertures 24g1 and 25g1.

The two tape guide members 24 and 25 are spring-biased in the central direction of the opening 5 by springs 135 and 136 supported on a supporting portion 130 implanted on the inner surface of the lower part 3. The upper surface sides of the bearing brackets 24g and 25g are pushed by pushing members 137 and 138 formed on the inner surface of the upper part 2, whereby the upper surface sides of the two tape guide members 24 and 25 are isolated from the inner surface of the upper part 2.

As described above, the tape T tensioned between the pinch rollers 9 and 10 is brought into sliding contact with the front surfaces of the two tape guide members 24 and 25 provided at respective sides of the opening 5 of the cassette casing 1.

More specifically, the tape T is extended through the inside of the supporting members 26 and 27 and the guide protrusions 28 and 29 between the pinch rollers 9 and 10. Then, the tape T is brought into sliding contact with the columnar guide surfaces 24d and 25d of the two guide members 24 and 25 so that the tape T is sandwiched between the receiving edge portions 24a1 , 24b1 and 25a1, 25b1 of the front elongated portions of the edge portions 24a, 24b and 25a, 25b in the inside of the engaging protrusions 24a2, 24b2 and 25a2, 25b2.

Therefore, even when the tape T is slackened between the pinch rollers 9 and 10, it can be prevented from being disengaged from the two tape guide members 24 and 25.

When the tape cassette in which the tape T is housed is loaded onto the recording and reproducing apparatus (not shown) each performs the recording or reproduction, the lid 6 of the cassette casing 1 is rotated in its lid opening direction thereby to open the opening 5. Under this condition, the head drum 42 is moved in unison with the two wing guides 43 and 44 and inserted into the opening 5 such that the head drum 42 is in slidable contact with the tape T. Also, the front ends of the wing guides 43 and 44 are inserted between the supporting members 26 and 27 and the guide protrusions 28 and 29.

Then, the head drum 42 comes into sliding contact with the edge portions 24a, 24b and 25a, 25b of the two tape guide members 24 and 25, which can be swung and moved in the lateral direction, that is, which can be moved freely within the opening 5 of the cassette housing 1. Depending on the positions and attitudes of the two tape guide members 24 and 25, the head drum 42 comes into contact with any one of the front end surfaces or rear end surfaces of the edge portions 24a, 24b and 25a, 25b. When the head drum 42 is inserted into the predetermined position of the opening 5, one side of the front or rear end surfaces is pushed and one tape guide member 24 or 25 is rotated about its shaft support portion by the shafts 131 and 132, so that the other tape guide member 25 or 24 comes into contact with the circumferential surface of the head drum 42.

When the head drum 42 comes into contact with one of the upper and lower sides of the edge portions 24a, 24b and 25a, 25b of the two tape guide members 24 and 25, they are pushed so that one tape guide member 24 or 25 is rotated with an inclination about the contact portions in which the columnar support edges 24g2, 25g2 of the bearing brackets 24g, 25g come into contact with the shafts 131, 132, and the other tape guide member 25 or 24 comes into circumferential contact with the head drum 42.

When the spacing between the two tape guide members 24 and 25 is small, by the insertion of the head drum 42, the two tape guide members 24 and 25 are moved in the lateral direction relative to the shafts 131 and 132 within the oblong shaft apertures 24g1, 25g1 of the bearing brackets 24g and 25g against the spring-biasing forces of the springs 135 and 136. Thus, the edge portions 24a, 24b and 25a, 25b are brought into circumferential contact with the head drum 42.

As described above, when the head drum 42 is inserted into the opening 5 of the cassette casing 1, the two tape guide members 24 and 25 reliably come into contact with the peripheral surface of the head drum 42 at the edge portions 24a, 24b and 25a, 25b, and the front and read ends thereof.

On the other hand, when the front end portions of the two wing guides 43, 44, that is the rollers 43a, 44a are inserted between the supporting members 26 and 27 and the guide protrusions 28 and 29, the two tape guides 24 and 25 come into rotatable contact with the tape T, and flanges 43b, 43c and 44b, 44c supporting the rollers 43a and 44a come into contact with the pressing edge portions 24e, 24f and 25e, 25f of the two tape guide members 24 and 25, and are in engagement with the concave portions 24e1, 24f1 and 25e1, 25f1 thereof, whereby the two tape guide members 24 and 25 are kept parallel to the head drum 42 in the front to back direction.

When the head drum 42 is inserted into the opening 5 of the cassette casing 1, the azimuth directions of the two tape guide members 24 and 25 are determined by the contact of the two wing guides 43 and 44 with the pressing edge portions 24e, 24f and 25e, 25f. The elevation directions of the two tape guide members 24 and 25 are determined by the contact of the head drum 42 with the edge portions 24a, 24b and 25a, 25b. Under this condition, the tape T is brought into sliding contact with the columnar guide surfaces 24d, 25d and the guide surfaces 24c, 25c between edge portions 24a, 24b and 25a, 25b so that the tape T is set at the position of the ideal tape path relative to the head drum 42.

The tape T, which is extended between the pinch rollers 9 and 10, is engaged with the engaging protrusions 24a2, 24b2 and 25a2, 25b2 between the receiving edge portions 24a1, 24b1 and 25a1, 25b1 of the two tape guide members 24 and 25 so that, when the head drum 42 is inserted into the opening 5, the tape T is brought into sliding contact with the circumferential surface of head drum 42 and is pushed inside the opening portion 5. Therefore, the tape T is reliably brought into slidable contact with the guide surfaces 24c and 25c between the edge portions 24a, 24b and 25a, 25b of the two tape guide members 24 and 25. There is then no risk that the contact portions of the edge portions 24a, 24b and 25a, 25b of the two tape guide members 24 and 25 come into contact with the head drum 42, that is, the chucking portion catches the tape T. Therefore, the tape T can be smoothly transported along the aforementioned tape path.

In the two tape guide members 24 and 25 which form the tape path as described above, the vertical columnar guide surfaces 24d, 25d may be formed of independent columnar members and may be secured to the cassette casing side.

In the upper and lower parts 2 and 3 forming the cassette casing 1 of this embodiment, the height of the upper part 2 is selected to be substantially half of the thickness of the cassette casing 1 in a range of from a rear wall surface 2c to two rear portions 2d1 of two side wall surfaces 2d, and the height of the portion except for the rear portions 2d1 of the two side wall surfaces 2d is also selected to be substantially equal to the thickness of the cassette casing 1, that is, the height forming the entire side surface of the cassette casing 1. On the other hand, the height of the lower part 3 is selected to be substantially half of the thickness of the cassette casing 1 in a range of from a rear wall surface 3c to two side rear wall surfaces 3d corresponding to the two side wall surface rear portions 2d1 of the upper part 2. The wall surface portions are not formed on the two side portions except the two side rear wall surfaces 3d and the portions except the rear portions, that is, at least the surfaces in which the shaft insertion apertures 3a and 3b are formed are shaped as flat portions which are opened in the two side directions. Two engaging stepped portions 2d2 are formed on the end edge portions of the two side wall surfaces 2d of the upper part 2, and engaging stepped portions 3e1 and 3e2 are formed on two side edges of the lower part 3 in correspondence with the two engaging stepped portions 2d2.

The upper and lower parts 2 and 3 are joined and fastened such that the rear wall surfaces 2c and 3c, the rear portions 2d1 of the two side wall surfaces 2d and the end edge surfaces of the two side rear wall surfaces 3d abut against each other and the engaging stepped portions 2d2 of the two side wall surfaces 2d of the upper part 2 and the engaging stepped portions 3e1 and 3e2 of the two side edges of the lower part 3 are engaged with each other, thereby forming the cassette casing 1.

In the assembly process in which the tape T is housed in the cassette casing 1, the lower part 3 has no side wall and is shaped flat so that the reel hubs 7 and 8 around which the tape T is wound can be loosely engaged with the shaft insertion apertures 3a and 3b of the lower part 3 from the lateral direction with no trouble, permitting easy and automatic assembly. Thus, production efficiency can be increased. The cassette casing 1 can be made more air-tight by engaging the engaging stepped portions 2d2 of the two side walls surfaces 2d of the upper part 2 with the engaging stepped portions 3e1 and 3e2 of the two side edges of the lower part 3, and also the strength of the cassette casing 1 can be increased.

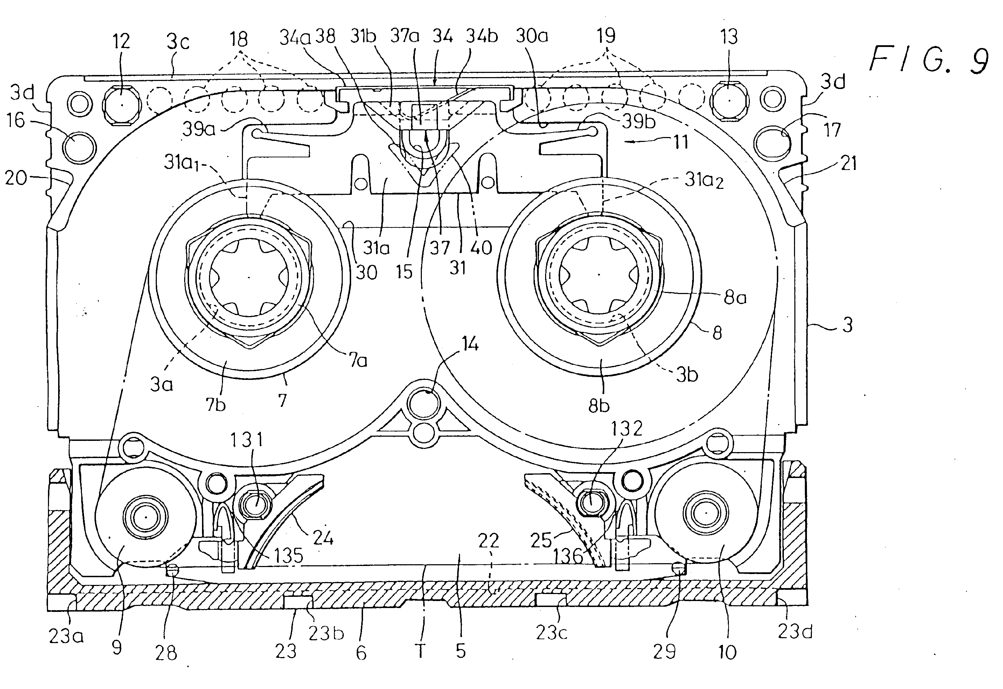

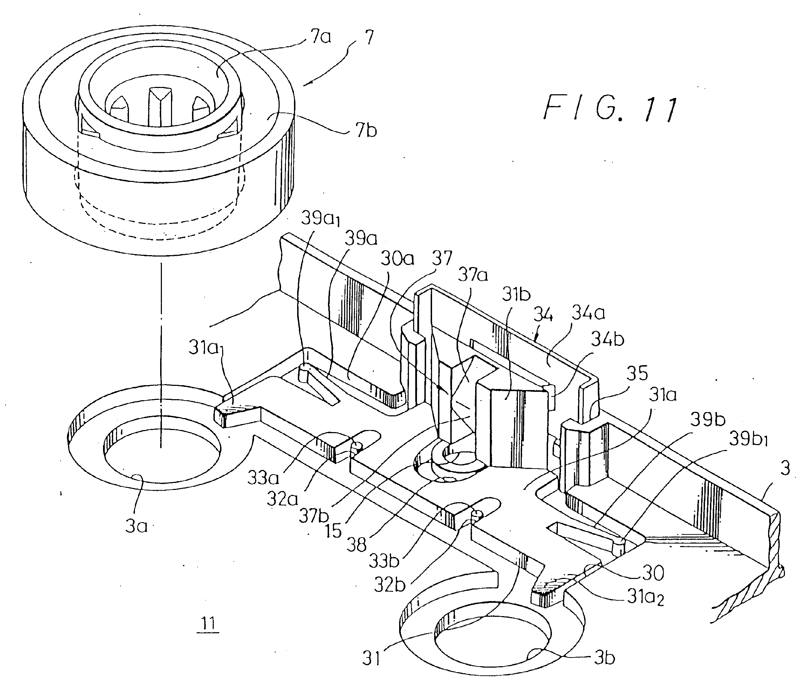

The arrangement of the braking mechanism 11 in the thus arranged magnetic tape cassette will be explained with reference to Figures 9 and 11 to 13.

As illustrated, a recess portion 30 of substantially rectangular configuration is formed on the bottom surface of the lower part 3 at its rear central portion. A braking member 31 is accommodated within the recess portion 30 such that the braking member 31 can be freely moved in the front to back direction, that is, in the direction in which the braking member 31 approaches or moves away from the reel hubs 7 and 8.

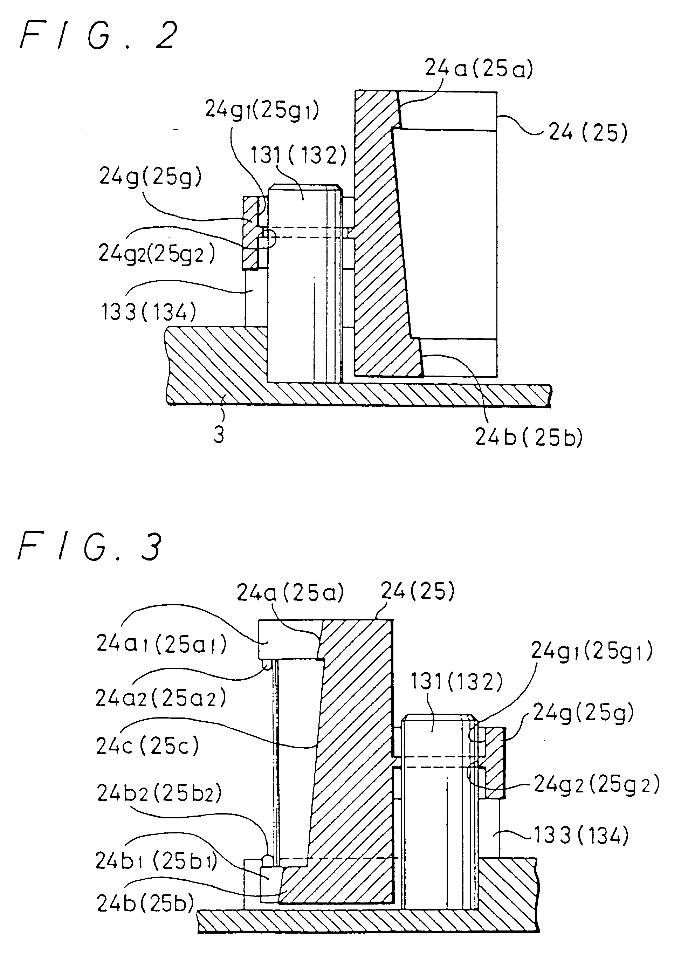

As shown in the figures, the braking member 31 comprises a flat plate portion 31a which is flush with the bottom surface of the recess portion 30 and a vertically-protruded wall portion 31b erected from the rear portion of the plate portion 31a. A pair of protruded nail members 31a1 and 31a2 are protruded from the front portion of the plate portion 31a so as to correspond with the two reel hubs 7 and 8 as shown in Figure 2. The top portions of the nail members 31a1 and 31a2 are urged against the reel hubs 7 and 8, whereby the two reel hubs 7 and 8 are locked, as will be described later.

The reel hubs 7 and 8 comprise inner hubs 7a and 8a with which hub drive shafts are engaged and outer hubs 7b and 8b which can be moved in the axial directions relative to the inner hubs 7a and 8a and which can be engaged with the inner hubs 7a and 8a in the circumferential direction thereof. The nail members 31a1 and 31a2 of the braking member 31 are urged against the peripheral surfaces of the inner hubs 7a and 8a protruded from the lower surfaces of the outer hubs 7b and 8b, respectively.

A pair of left and right guide slits 32a and 32b of recess configurations are formed on the central portion of the plate portion 31a so as to extend from the front edge of the plate portion 31a to its rear direction. A pair of guide pins 33a and 33b project from the bottom of guide slits 32a and 32b. The guide slits 32a and 32b are guided by the guide pins 33a and 33b, whereby the moving direction of the braking member 31 is restricted.

A plate spring 34 is provided at the rear side of the braking member 31 to spring-bias the braking member 31. The plate spring 34 comprises a main plate portion 34a and an arm portion 34b erected from the central portion of the main plate portion 34a. The main plate portion 34a is engaged with a spring accommodating portion 35 provided at the rear side wall inner surface side of the lower part 3, and the arm portion 34b is engaged at its top portion with a concave portion 36 formed on the rear surface side of the wall portion 31b as shown in Figure 2. Thus, the braking member 31 is always spring-biased in the forward direction, that is in the direction in which the nail members 31a1 and 31a2 are urged against the peripheral surfaces of the inner hubs 7a and 7b.

The wall portion 31b of the braking member 31 has on its central front surface side formed a pressing operation portion 37 which allows the braking member 31 to perform the hub lock releasing operation. This pressing operation portion 37 is formed as a mountain-configuration whose central portion is high in cross-sectional side view, that is, this pressing operation portion 37 has inclined cam surfaces 37a and 37b whose cam surfaces are symmetrically inclined rearwardly towards the upper to lower sides from the central portion. When this pressing operation portion 37 is pressed by a lock releasing pin inserted from the insertion aperture formed through the upper and lower parts 2 and 3, the braking member 31 is moved in the rearward direction, whereby the reel hubs 7 and 8 are released from their locked conditions.

In this embodiment, one of the positioning reference apertures of the cassette casing 1, that is the reference aperture 15, is at the rear and central portion of the cassette casing 1 in its front to back direction so that, when the tape cassette is loaded onto the cassette tape recorder, a cassette tape recorder side positioning pin 50 inserted into the reference aperture 15 is used as the lock releasing pin, so that the hub lock releasing operation of the braking member 31 is performed by the pin 50.

An opening 38 elongated in the front to back direction is formed through the central portion of the plate portion 31a of the braking member 31 in correspondence with the reference aperture (insertion aperture) 15, and the opening 38 is employed as a portion in which the pin 50 inserted from the lower half 3 side escapes.

A pair of left and right protruded portions 39a and 39b are symmetrically protruded from both sides of the plate portion 31a of the braking member 31 at its rear portion in the lateral direction. The protruded portions 39a and 39b are made to have a predetermined resiliency so that, if the braking member 31 is abnormally operated in an inclined fashion in the hub lock releasing operation, any one of top circular-shaped portions 39a1 and 39b1 of the two protruded portions 39a and 39b comes into contact with a rear side edge surface 30a of the recess portion 30, so the braking member 31 is returned to the normal hub lock releasing condition.

In this braking mechanism 11, a supporting column member 40 projects from the inner surface side of the upper part 2 towards the lower direction and the lower end face of the column member 40 faces the central portion of the plate portion 31a of the braking member 31. The braking member 31 is always restricted by the column member 40, so that it can be prevented from being disengaged from the recess portion 30.

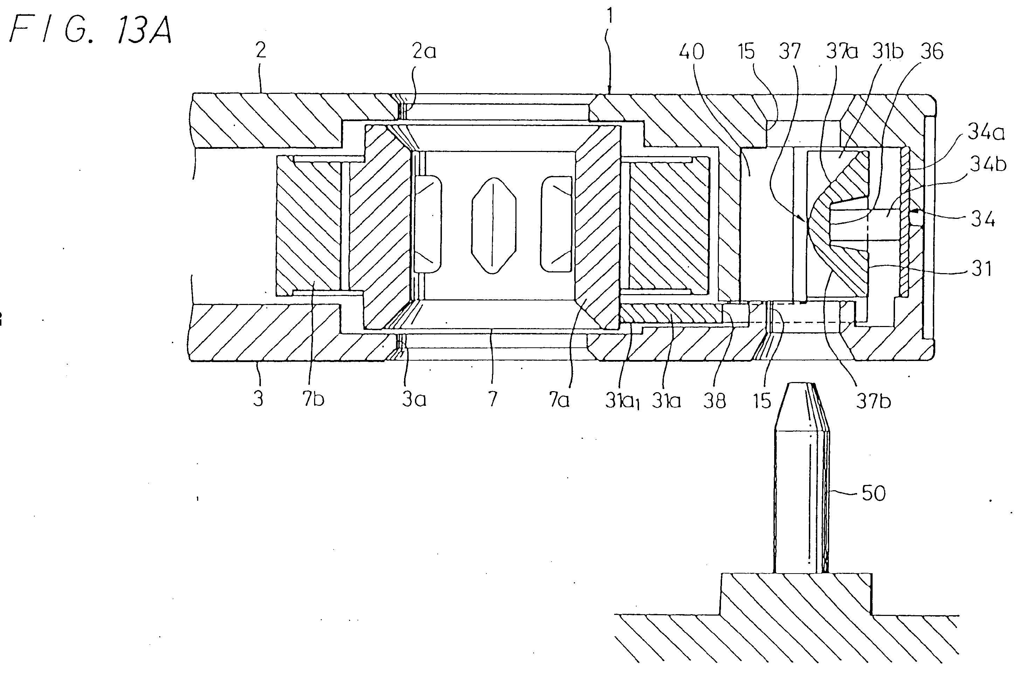

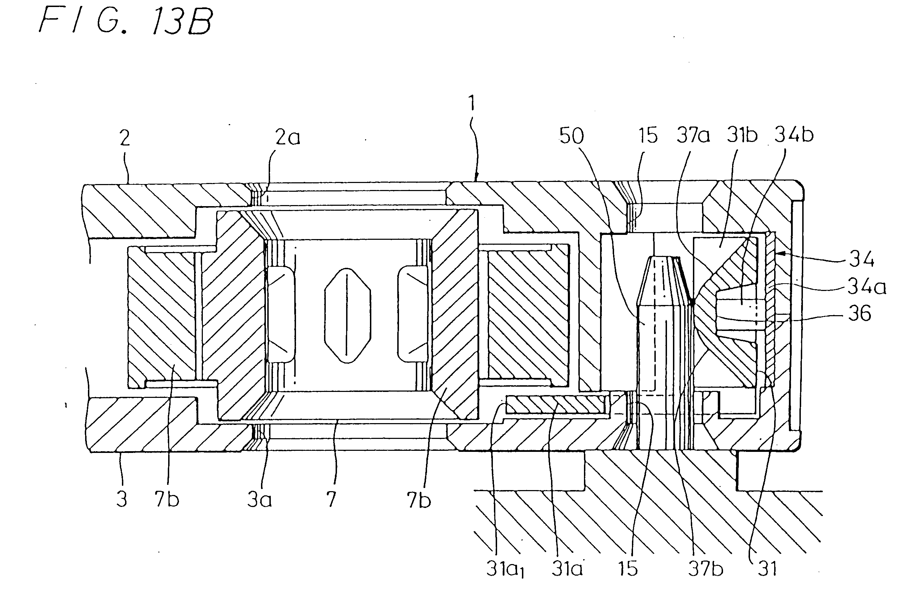

As will be clear from the above-mentioned arrangement, with the braking mechanism 11 of the tape cassette of this embodiment, in the normal condition, or when the tape cassette is not in use, the nail members 31a1 and 31a2 of the braking member 31 are urged against the peripheral surfaces of the inner hubs 7a and 8a of the two reel hubs 7 and 8 by the spring-biasing force of the plate spring 34, whereby the two reel hubs 7 and 8 are located and hence they can be prevented from being rotated by a certain amount of shock (see Figures 9 and 13A).

When the tape cassette is loaded onto the cassette tape recorder, the cassette tape recorder side positioning pin 50 is inserted into the reference aperture 15 (in actual practice, the cassette casing 1 is lowered and the reference aperture 15 is engaged with the positioning pin 50), the positioning of the cassette casing 1 is performed and the hub lock releasing operation by the braking member 31 is simultaneously performed.

The hub lock releasing operation by the braking member 31 can be performed from any side of the upper part 2 and the lower part 3. That is, when the tape cassette is loaded onto the cassette tape recorder with the upper part 2 side (so-called side A) up as shown in Figure 3, the pin 50 inserted into the reference aperture 15 of the lower part 3 side presses the inclined cam surface 37b of one side (lower side in Figure 3) of the pressing operation portion 37, so that the braking member 31 is moved rearwards against the spring-biasing force of the plate spring 34, that is, the braking member 31 is moved in the direction in which the nail members 31a1 and 31a2 come apart from the inner hubs 7a and 8a of the reel hubs 7 and 8 (see Figures 2 and 3B). Conversely, when the tape cassette is loaded onto the cassette tape recorder with the cassette casing 1 turned over and the lower part 3 side (so-called side B) up, the pin 50 inserted into the reference aperture 15 of the upper part 2 side presses the inclined surface 37a of the other side of the pressing operation portion 37, whereby the braking member 31 is moved in the rearward direction as described above, so the reel hubs 7 and 8 are released from their locked conditions, or the reel hubs 7 and 8 are allowed to rotate freely.

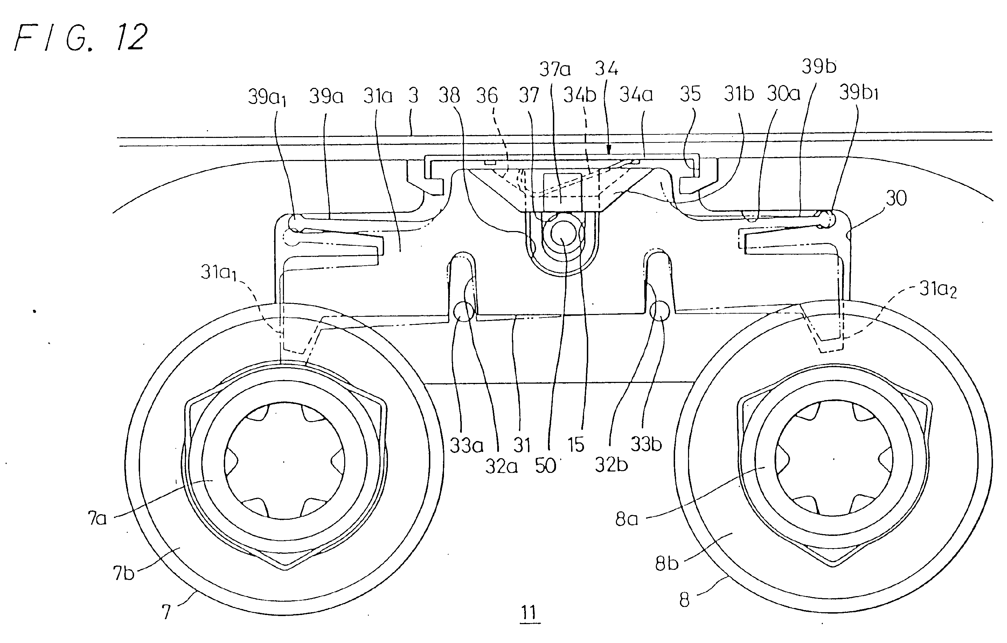

In the hub lock releasing operation of the braking member 31, the braking member 31 is operated by pressing one point of the central portion of the braking member 31. There is then the substantial risk that the braking member 31 may frequently be operated in an unbalanced fashion and is moved in the inclined condition as shown by a two-dot chain line in Figure 12, so the braking member 31 is placed in a so-called deviated condition where only one nail member 31a1 or 31a2 engages with the reel hub 7 or 8. In that case, the top circular-shaped portion of either of the left and right protruded portions (the top circular-shaped portion 39b1 of the right protruded portion 39b in the example of Figure 12) comes into contact with the edge portion 30a of the recess portion 30, whereby the braking member 31 is returned to the normal condition that the two nail members 31a1 and 31a2 align with the reel hubs 7 and 8 in a well-balanced condition by virtue of the cushion-action of the protruded portion. Thus, the two nail members 31a1 and 31a2 come apart from the reel hubs 7 and 8 together, or the braking member 31 can be protected from the above-mentioned defect and the two reel hubs 7 and 8 can be released from their locked conditions.

Under the condition that the reel hubs 7 and 8 are positively released from being locked by the braking member 31, the reel hubs 7 and 8 are rotated by the driving of the hub drive shafts (not shown) of the cassette tape recorder, so the tape T is transported.

As described above, the hub lock releasing operation can be performed from the upper part 2 side or the lower part 3 side of the cassette casing 1. Therefore, the tape cassette can be of double-sided type which is turned over for recording and reproduction to be performed in a reciprocating fashion.

Since the positioning reference aperture 15 of the cassette casing 1 is utilized as the pin insertion aperture into which the pin 50 for operating the braking member 31 is inserted, insertion apertures need not be formed through the upper and lower parts 2 and 3 of the cassette casing 1, which saves space from a design standpoint. This is very effective for the extremely small magnetic tape cassette of this embodiment in which space on the cassette casing 1 is restricted. Also, on the cassette tape recorder side, the lock releasing pin for operating the braking member 31 is not needed and the positioning of the cassette casing 1 and the hub lock releasing operation of the braking member 31 are simultaneously performed by the pin 50 which performs the positioning of the cassette casing 1. Therefore, the mechanism of the cassette tape recorder can be simplified.

Further, since the braking member 31 is abnormally operated in the inclined condition and placed in the single-returned condition during the hub lock releasing operation, the braking member 31 can be returned to the normal condition by the cushion action of either one of the left and right protruded portions 39a and 39b, thereby ensuring that the hub lock releasing operation is always performed positively. Therefore, in the recording or reproducing operation, the reel hubs 7 and 8 can be smoothly rotated without any resistance, to ensure that the tape T can be stably transported.

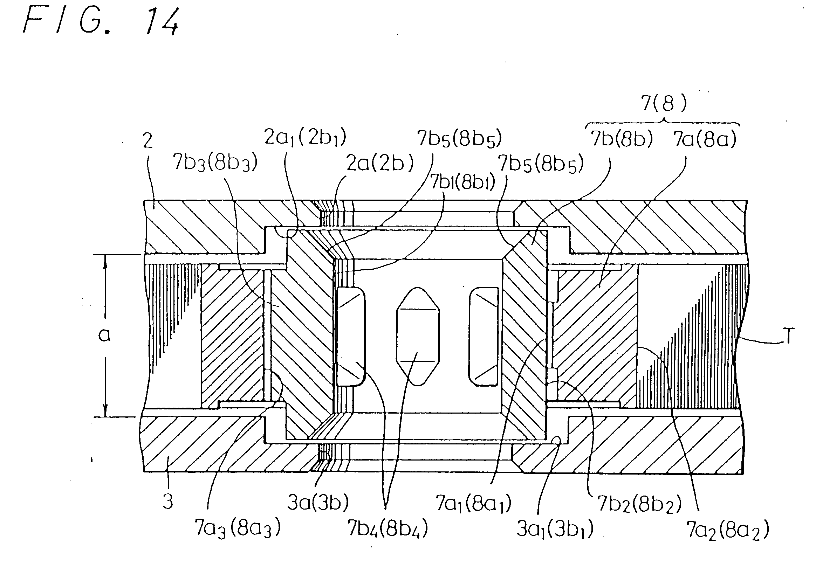

The reel hubs 7 and 8 and their associated parts will now be described in detail with reference to Figure 14. The reel hubs 7 and 8 are structurally identical to each other, and only the reel hub 7 and its associated parts are shown in Figure 14, with only references characters of the other reel hub 8 and its associated parts being added in parenthesis.

The reel hubs 7, 8 comprise respective outer hubs 7a and 8a and respective inner hubs 7b and 8b. The outer hubs 7a and 8a are in the form of drums and have respective inner circumferential surfaces 7a1 and 8a1. The inner hubs 7b and 8b, which are of a hollow cylindrical shape, are axially slidably fitted in the outer hubs 7a and 8a, respectively, and have respective outer circumferential surfaces 7b2 and 8b2 which are held in circumferential engagement with the inner circumferential surfaces 7a1 and 8a1, respectively, so that the outer hubs 7a and 8a and the inner hubs 7b and 8b are rotatable in unison with each other. The outer hubs 7a and 8a have respective outer circumferential surfaces 7a2 and 8a2 around which the tape T is wound. The inner hubs 7b and 8b have respective inner circumferential surfaces 7b1 and 8b1 defining axial holes in which the hub drive shafts will be inserted.

The inner circumferential surfaces 7a1 and 8a1 of the outer hubs 7a and 8a have a plurality of axial engaging recesses 7a3 and 8a3 spaced at intervals in the circumferential direction. The inner hubs 7b and 8b have an outside diameter larger than the inside diameter of the apertures 2a, 3a, 2b and 3b for receiving the hub drive shafts, and a height or axial length slightly larger than the inner width of the cassette casing 1, that is, the distance a between the inner surfaces of the upper and lower parts 2 and 3. The outer circumferential surfaces 7b2 and 8b2 of the inner hubs 7b and 8b have a plurality of axial engaging teeth 7b3 and 8b3 which axially move with respect to, but circumferentially engage in the axial engaging recesses 7a3 and 8a3 for circumferential movement in unison. The outer hubs 7a and 8a and the inner hubs 7b and 8b are axially slidable with respect to each other, but are held in circumferential engagement with each other. The inner circumferential surfaces 7b1 and 8b1 of the inner hubs 7b and 8b have a plurality of circumferentially spaced engaging teeth or ridges 7b4 and 8b4 which will be engaged by similar engaging teeth or ridges on the hub drive shafts. The inner hubs 7b and 8b have tapered guide surfaces 7b5 and 8b5 on axially opposite open ends thereof, which are contiguous to the inner circumferential surfaces 7b1 and 8b1, and are progressively inclined radially inwardly towards the inner circumferential surfaces 7b1 and 8b1.

The upper and lower parts 2, 3 have circular recesses or stepped surfaces 2a1, 2b1 and 3a1, 3b1 defined in the inner surfaces thereof in coaxial surrounding relation to the apertures 2a, 2b and 3a, 3b, respectively. The stepped surfaces 2a1, 2b1 and 3a1, 3b1 are of a diameter larger than the outside diameter of the axial open ends of the inner hubs 7b and 8b. The circular axial open ends of the inner hubs 7b and 8b are loosely fitted respectively in the stepped surfaces 2a1, 2b1 and 2a1, 3b1 so that the inner hubs 7b and 8b are rotatably supported between the upper and lower parts 2 and 3.

The hubs 7 and 8 are housed in their entirety between the upper and lower parts 2 and 3 and are therefore concealed in the cassette casing 1 for protection against direct access by fingers from the outer surfaces of the upper and lower parts 2 and 3. Therefore, the hubs 7 and 8 are prevented from being inadvertently turned by fingers from outside the cassette casing 1. Since the outside diameter of the inner hubs 7b and 8b, which define the holes for receiving the hub drive shafts, is larger than the inside diameter of the apertures 2a, 2b and 3a, 3b in the upper and lower parts 2 and 3, and also since the inner hubs 7b and 8b have the tapered guide surfaces 7b5 and 8b5, the hub drive shafts can smoothly be guided and inserted through the apertures 2a, 2b and 3a, 3b into the holes in the inner hubs 7b and 8b, without directly hitting the hubs 7 and 8. The hubs 7 and 8 and the hub drive shafts are thus protected against damage when the magnetic tape cassette is loaded into the magnetic tape recording and reproducing apparatus.

The inside diameter of the apertures in the hubs 7 and 8 for receiving the hub drive shafts can be selected as desired without direct bearing on the apertures 2a, 2b and 3a, 3b in the upper and lower parts 2 and 3. Therefore, the hubs 7 and 8 can be constructed with less design limitations and hence manufactured with ease.

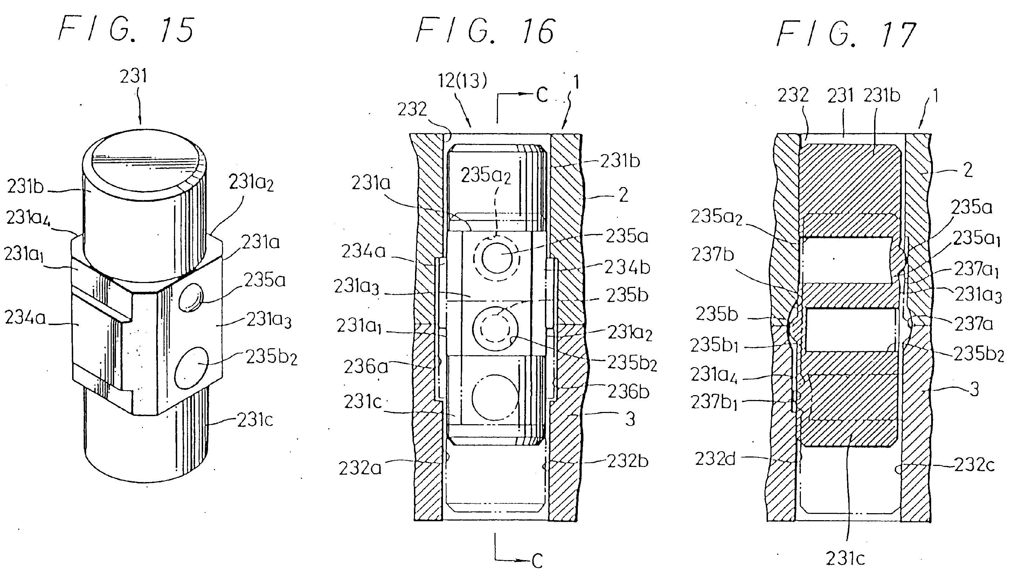

In the tape cassette described above, the mis-erase preventing mechanisms 12 and 13 disposed in the cassette casing 1 will be described in detail with reference to Figures 15 to 17. Since the two mis-erase preventing mechanisms 12 and 13 are constructed the same, the mis-erase preventing mechanism 12 is illustrated and the other mis-erase preventing mechanism 13 therefore need not be shown in Figures 15 to 17.

In each of the mis-erase preventing mechanisms 12 and 13, a mis-erase preventing detection sliding member (hereinafter simply referred to as a protective plug) 231 is slidably inserted into an insertion aperture 232 which is formed through the cassette casing 1 at its rear side portion in the thickness direction of the cassette casing 1.

The protective plug 231 is moulded of synthetic resin or the like which can be resiliently deformed. The length of the protective plug 231 is shorter than that of the insertion aperture 232. An intermediate portion 231a thereof is formed to have a substantially quadrilateral cross-section. Two end portions 231b and 231c thereof are formed to have circular cross-sections. The intermediate portion 231a has formed on surfaces 234a1 and 234a2 opposing in one direction stop convex surfaces 234a and 234b placed at the central portions in an opposing relation. The intermediate portion 231a has formed on the other opposing surfaces 231a3 and 231a4 click stop protrusions 235a and 235b of substantially hemispherical configuration. The click stop protrusions 235a and 235b are displaced at a predetermined spacing from each other relative to the length direction of the protective plug 231 such that, even when the protective plug 231 is inserted, the click stop protrusions 235a and 235b are located at the same positions.

Protrusion surfaces 235a1 and 235b1 of the click stop protrusions 235a and 235b are thin, so that they can be slightly resiliently deformed. That is, the protrusion surfaces 235a1 and 235b1 are formed thin by forming spot facing holes 235a2 and 235b2 having predetermined depths from the surfaces facing the protrusion surfaces 235a1 and 235b1 of the click stop protrusions 235a and 235b.

On the other hand, the insertion aperture 232 into which the protective plug 231 constructed as described above is inserted, is a hollow portion having an inner diameter nearly equal to the diameter of the transverse cross-section of the intermediate portion 231a of the protective plug 231. The insertion aperture 232 is formed through the upper part 2 to the lower part 3 and concave stop portions 236a and 236b are formed on inner wall surfaces of the insertion aperture 232 opposing in one direction, that is surfaces 232a and 232b opposing the convex surfaces 234a and 234b of the protective plug 231 across the jointed portion of the upper and lower parts 2 and 3 of the cassette casing 1 such that the stop convex surfaces 234a and 234b are slidably engaged therewith in the longitudinal direction of the insertion aperture 232. The stop convex surfaces 234a and 234b are moved and engaged with the concave stop portions 236a and 236b, whereby the stroke of the protective plug 231 is restricted.

Click stop concave portions 237a and 237b are formed on the inner wall surfaces of the insertion aperture 232 opposing other surfaces, that is on surfaces 232c and 232d opposing the click stop protrusions 235a and 235b of the protective plug 231 across the joined portion of the upper and lower parts 2 and 3 of the cassette casing 1, such that the click stop concave portions 237a and 237b may be engaged with the click stop protrusions 235a and 235b. A guide groove 237a1 extending to the upper part 2 side is formed to be continuously communicated with the click stop concave portion 237a corresponding to one click stop protrusion 235a. A guide groove 237b1 extending to the lower part 3 side is formed to be continuously communicated with the click stop concave portion 237b corresponding to the other click stop protrusion 235b. The two guide grooves 237a1 and 237b1 are shallower than the click stop concave portions 237a and 237b, respectively.

The operation of the mis-erase preventing mechanisms 12 and 13, formed by the protective plugs 231 and the insertion apertures 232, will now be explained.

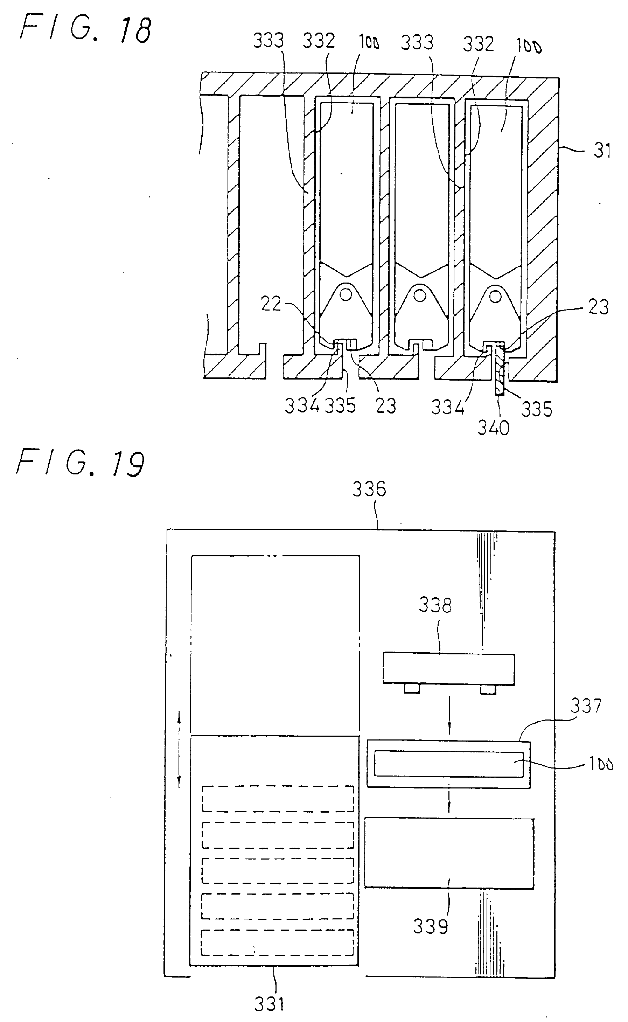

Firstly, when the protective plug 231 in the insertion aperture 232 is located within the insertion aperture 232 at its upper position in the thickness direction of the cassette casing 1, or when it is located on the upper part 2 side, the stop convex surfaces 234a and 234b of the protective plug 231 are respectively positioned in the stop concave portions 236a and 236b of the insertion apertures 232 at the upper part 2 side, as shown by the solid lines in Figures 16 and 17, and in this condition, the click stop protrusion member 235b is in engagement with the click stop concave portion 237b. Since the click stop protrusion members 235a and 235b are positionally deviated from each other, one slick stop protrusion 235a is not engaged with one click stop concave surfaces 237a and is urged against the guide groove 237a1 contiguous to the upper part 2 side. In this state, this click stop protrusion 235a is pushed by a proper predetermined pushing force because the guide groove 237a1 urged therewith has a level difference between it and the inner wall surface of the insertion aperture 232 and the protrusion portion surface 235a1 is resiliently deformed. By this pushing force, the other click stop protrusion 235b is urged against and engaged with the other click stop concave portion 237b, so that the protective plug 231 is positively positioned and held at the upper side of the insertion aperture 232.

When the protective plug 231 is located at the lower position of the insertion aperture 232, that is, located at the lower part 3 side, as shown by two-dot chain lines in Figures 16 and 17, the stop convex portions 234a and 234b are brought into contact with the stop concave portions 236a and 236b in the lower part 3 side. Under this condition, one click stop protrusion 235a is engaged with one click stop concave portion 237a. The other click stop protrusion 235b is disengaged from the other click stop concave portion 237b and is urged against the guide groove 237b1 continued to the lower part 3 side.

In this state, similarly to the case that the protective plug 231 is located at the upper position, one click stop protrusion 235a is urged against and engaged with one click stop concave portion 237a by a proper pushing force of the other click stop protrusion 235b similarly as described above, whereby the protective plug 31 is positively placed at the lower side of the insertion aperture 232.

In the position switching operation of the protective plug 231, since the protective plug 231 is moved under the condition that the click stop protrusions 235a and 235b are brought into slidable contact with the inner surfaces of the guide grooves 237a1 and 237b1 contiguous to the click stop concave portions 237a and 237b, the position of the protective plug 231 can be switched stably and smoothly. Particularly, in this embodiment, since the click stop protrusions 235a and 235b are resiliently deformed in the direction in which they are pushed, the protective plug 231 can be moved more smoothly, and the click stop protrusions 235a and 235b can be engaged with the click stop concave portions 237a and 237b more positively.

Further, in the position switching operation of the protective plug 231, when the protective plug 231 is pushed by a larger pushing force than is necessary so that the click stop protrusions 235a and 235b extend over the click stop concave portions 237a and 237b, the stop convex surfaces 234a and 234b are contacted with and engaged with the end edges of the stop concave portions 236a and 236b of the insertion aperture 232 thereby to inhibit the protective plug 231 from being slid further, thus preventing the protective plug 231 from being disengaged from the insertion aperture 232.

As described above, the position of the protective plug 231 is changed relative to the insertion aperture 232 of the cassette casing 1, and this change of the position is detected by a detecting switch through a detecting pin or the like, whereby the two conditions of the erase possible condition and the mis-erase preventing condition can be identified positively.

The mis-erase preventing mechanisms 12 and 13 of this embodiment can perform exactly the same position switching operation, that is, detecting operation as described above even when they are inverted in their up to down direction.

Various modifications can be effected. For example, the shape of the transversal section of the protective plug 231 and the inner shape of the insertion aperture 232 are not limited to quadrilaterals and may be hexagonal or the like in which the stop means can be formed of at least two opposing surfaces and the click stop means can be formed of another two opposing surfaces.

Thus, as described above, the tape cassette is provided with stop means for preventing the protective plug from being disengaged, and the position click stop means for engaging the protective plug at the predetermined switching positions of the erase possible condition and the mis-erase preventing condition, which are independently provided between the protective plug slidably inserted into the thickness direction of the cassette casing and the insertion aperture into which the protective plug is inserted, and the click stop means is formed by coupling the protective plug and the guide portion. Therefore, the switching operation of the protective plug can be stably and smoothly carried out, whereby the tape cassette can be positively placed in the erase possible condition and the mis-erase preventing condition with ease.

Further, when the protective plug is pushed by a larger pushing force than is necessary in this switching operation or when the click stop means is worn, the protective plug can be prevented from being disengaged from the insertion aperture and the mis-erase can be positively avoided, making the tape cassette reliable.

The embodiment of magnetic tape cassette described is of extremely small type, so that there is the risk that if this tape cassette is used alone, it will be lost. Thus, when not in use, a plurality of the tape cassettes are accommodated within a cassette magazine which will be referred to later.

The lid 6, which opens and closes the opening 5, is modified such that the tape cassette can be accurately accommodated within the cassette magazine and a desired tape cassette can be taken out therefrom with ease.

More specifically, the guide groove 22 provided on the front wall of the lid 6 is formed with a displacement towards one of the upper and lower sides (toward the lower side in this embodiment) from the central portion of the lid 6 in the lateral direction. The guide groove 22 is adapted to restrict the direction in which the tape cassette is inserted into the cassette magazine, as will be described later.

The engaging portion 23 formed along the guide groove 22 is used to withdraw the tape cassette from the cassette magazine. In this arrangement, the engaging portion 23 is composed of first to fourth cutaway concave portions 23a, 23b, 23c and 23d which are formed between two end portions of the lid 6 along the guide groove 22 in the lateral direction. To be more precise, the first and fourth cutaway concave portions 23a and 23d are formed at left and right end portions of the front surface of the lid 6 so as to be open at the side surfaces of the lid 6. Between the two cutaway concave portions 23a and 23d, the second and third cutaway concave portions 23b and 23c are formed at the front central portion of the lid 6. The four cutaway concave portions 23a, 23b, 23c and 23d are formed at a substantially equal spacing.

Figure 18 shows an example of a cassette magazine 331. The cassette magazine 331 is provided with a plurality of accommodating portions 332 into which magnetic tape cassettes 100 are loaded in the lateral direction. The accommodating portions 332 are isolated by respective partition walls 333. An engaging protrusion 334 is formed on the bottom portion of each of the accommodating portions 332 so as to extend in the depth direction. When the tape cassette 100 is accommodated within the accommodating portion 332, the guide groove 22 of the lid 6 is engaged with the engaging protrusion 334.

In the loading of the tape cassette 100 into the accommodating portion 332 of the cassette magazine 331, the guide groove 22 of the lid 6 deviates the central portion of the lid 6 so that, if the tape cassette 100 is reversed and loaded into the accommodating portion 332 of the cassette magazine 331 in the opposite direction, the guide groove 22 cannot be opposed to the engaging protrusion 334 accurately, so the tape cassette 100 is prevented from being loaded into the accommodating portion 332 of the cassette magazine 331.

A slit 335 is formed on the bottom portion of each of the accommodating portions 332 along the engaging protrusion 334, and a withdrawing arm of a cassette withdrawing apparatus, which will be referred to later, is inserted into the slit 335.

A plurality of tape cassettes 100 accommodated within the cassette magazine 331 are loaded onto a recording and reproducing apparatus while accommodated within the cassette magazine 331. Within the recording and reproducing apparatus, a desired tape cassette 100 is automatically taken out from the cassette magazine by a cassette changer system of the recording and reproducing apparatus, and the recording and reproduction are performed.

The cassette changer system of a recording and reproducing apparatus 336 will now be explained with reference to Figure 19. When the cassette magazine 331 in which a plurality of tape cassettes 100 are accommodated is inserted into the recording and reproducing apparatus 336, the cassette magazine 331 is moved by a predetermined moving mechanism (not shown) and one tape cassette 100 is withdrawn from the designated accommodating portion 332 by a withdrawing apparatus 337. When the tape cassette 100 is withdrawn from the cassette magazine 331, the tape cassette 100 is carried to a driving mechanism section 339 by a moving apparatus 338 and loaded onto the driving mechanism section 339. In the driving mechanism section 339, the aforementioned rotary head 41 is inserted into the opening 5 of the tape cassette 100, whereby the predetermined recording or reproduction is performed.

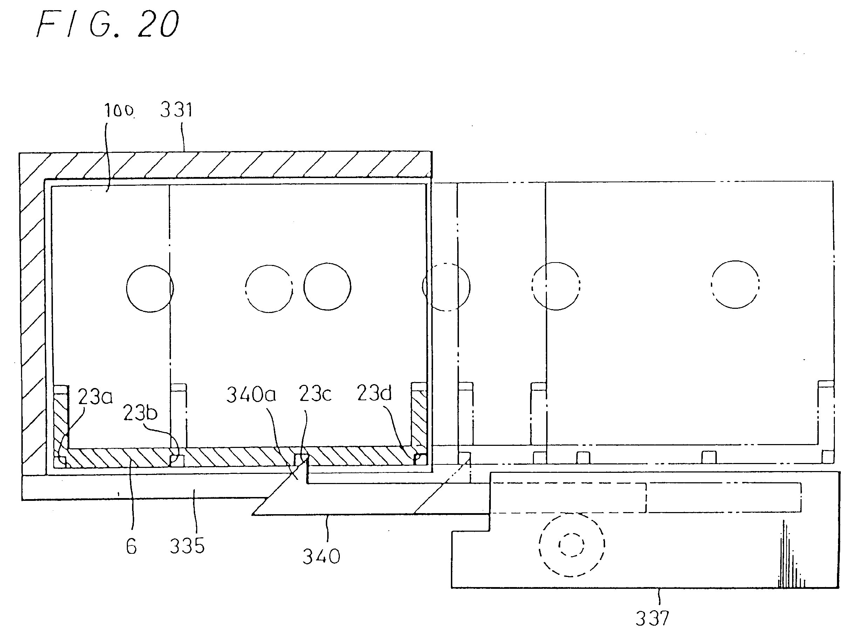

The withdrawing apparatus 337 for withdrawing the tape cassette 100 from the cassette magazine 331 in the cassette changer system is arranged as shown in Figure 20, and is provided with a withdrawing arm 340 which has formed at a top portion thereof a ratchet-shaped engaging nail portion 340a which is engaged with the engaging portion 23 of the lid 6 only in the direction in which the tape cassette 100 is withdrawn from the cassette magazine 331. When the cassette withdrawing arm 340 is reciprocated, its engaging nail portion 340a is engaged with the engaging portion 23 of the tape cassette 100, whereby the tape cassette 100 is withdrawn from the cassette magazine 331.

In this arrangement, the tape cassette 100 can be withdrawn from the cassette magazine 331 by reciprocating the withdrawing arm 340 by a small stroke a plurality of times. More specifically, by the first reciprocation of the withdrawing arm 340, the engaging nail portion 340a is engaged with the third cutaway concave portion 23c of the engaging portion 23 to withdraw the tape cassette 100 from the cassette magazine 331 by about one-third. By the second reciprocation of the withdrawing arm 340, the engaging nail portion 340a is engaged with the second cutaway concave portion 23b of the engaging portion 23 to withdraw the tape cassette 100 from the cassette magazine 331 by about a further one-third. Then, in the third reciprocation of the withdrawing arm 340, the engaging nail portion 340a is engaged with the first cutaway concave portion 23a of the engaging portion 23, whereby the tape cassette 100 is wholly withdrawn from the cassette magazine 331.

The tape cassette 100 thus withdrawn from the cassette magazine 331 is carried to the driving mechanism section 339 by the moving apparatus 338 of the cassette changer system, whereby the recording or reproduction can be performed.

In this tape cassette 100, since the engaging portion 23 to be engaged with the withdrawing arm 340 of the cassette changer is formed on the front surface of the lid 6, the tape cassette 100 can be withdrawn from the cassette magazine 331 with ease.

Moreover, the engaging portion 23 is formed of a plurality of cutaway concave portions 23a, 23b, 23c and 23d arranged in the lateral direction of the lid 6 at substantially equal spacing, so that the stroke of each reciprocation of the withdrawing arm 340 can be reduced, thus making it possible to withdraw the tape cassette 100 from the cassette magazine 331 by a plurality of strokes. Therefore, the withdrawing apparatus 337 can be miniaturized, which can make the overall cassette changer system small in size.

Since the engaging portion 23 is formed on the lid 6, the invention can be applied to the magnetic tape cassette without large changes from a design standpoint.

More specifically, if the engaging portion 23 is provided in the cassette casing 1 side instead of the lid 6, a magnetic tape accommodating space and the locations of various detection holes or the like must be varied, and because the space on the cassette casing 1 is very restricted, the design is very difficult. In this arrangement, since the engaging portion 23 is provided at an otherwise vacant space on the front surface of the lid 6, the design of the cassette casing 1 is not affected, and the lid 6 only needs to be modified very slightly.

The rollers 43a and 44a mounted on the front ends of the wing guides 43 and 44 provided on the head drum 42 may be modified such that upper and lower flange portions are secured to the wing guides 43 and 44, and the intermediate cylindrical portions which come into contact with the magnetic tape T are formed as rotatable rollers.

The present invention is not limited to very small type tape cassette and may be applied to larger tape cassettes.

As set forth above, the magnetic tape cassette described has the opening into which the head drum having the rotary head is inserted. The pair of tape guide members which guide the tape-like record medium so that the record medium is helically wrapped around the head drum are provided inside the opening so as to be able to swing independently. Thus, when the head drum is inserted into the opening, even if the elevation angle, the azimuth angle and guide opening angle, or the composite angle of the aforementioned angles are different, the pair of tape guide members can accommodate such differences. Also, the spacing between the two tape guide members is determined by the wing guides of the head drum. The two tape guide members are brought into slidable contact with the circumferential surface of the insertion portion of the head drum to form the ideal tape path, and the tape-like record medium comes into slidable contact with the circumferential surface of the head drum accurately, whereby the centre of the wrapping angle of the tape-like record medium is correctly held. Therefore, the position of the record pattern of the tape-like record medium can be prevented from being displaced, so that the recording and/or reproduction can be positively carried out, which increases the reliability of the magnetic tape cassette.

Since the cassette casing and the tape guide members are independently provided, an optimum material can be selected for the material of the tape guide members. The cassette shells forming the cassette casing can be prevented from being deformed, and can be prevented from being irregularly produced in the manufacturing process. Thus, the dimensional accuracy can be determined with freedom, which as a result reduces the cost.

## Claims

1. A magnetic tape cassette in which an opening (5) is formed on the front surface side of a cassette casing (1) into which a head drum (42) can be inserted, a tape-like record medium (T) wound around reel hubs (7, 8) and housed in the cassette casing (1) is helically wrapped around the head drum (42) when it is inserted into the opening (5), and helical scan recording and/or reproduction is performed by a rotary head (41) mounted on the head drum (42), the magnetic tape cassette comprising a pair of tape guide members (24, 25) independently provided inside the opening (5) of the cassette casing (1) to guide the record medium (T) such that the record medium (T) is helically wrapped around the head drum (42);
characterised in that the pair of tape guide members (24, 25) are rotatably mounted on the cassette casing, have curved protruded supporting edge portions (24a, 24b, 25a, 25b) which come into circumferential contact with the head drum (42) upon insertion of the head drum into the opening (5), and can be swung and moved in the lateral direction.

2. A cassette according to claim 1 wherein the pair of tape guide members (24, 25) have arcuate tape guide surfaces (24c, 25c) which correspond to the circumferential surface of the head drum (42).

3. A cassette according to claim 2 wherein the arcuate tape guide surfaces (24c, 25c) of the pair of tape guide members (24, 25) are formed with inclined surfaces (24c, 25c) inclined in respective opposite directions.

4. A cassette according to claim 2 wherein the protruded supporting edge portions (24a, 24b, 25a, 25b) of the pair of tape guide members (24, 25) are provided on the upper and lower portions of the tape guide surfaces (24c, 25c) at a spacing wider than the width of the record medium (T).

5. A cassette according to claim 4 wherein the pair of tape guide members (24, 25) have at the front ends of the opening (5) of the cassette casing (1) receiving edge portions (24a1, 25a1) contiguous to the protruded supporting edge portions (24a. 24b, 25a, 25b) thereby to guide the head drum (42).

6. A cassette according to claim 1 wherein the pair of tape guide members (24, 25) are provided at the front ends of the opening (5) of the cassette casing (1) and at their left and right positions with vertical columnar guide portions (24d, 25d) for introducing and ejecting the record medium (T).

7. A cassette according to claim 6 wherein the vertical columnar guide portions (24d, 25d) have at their end portions of the opening (5) of the cassette casing (1), receiving edge portions (24a1, 25a1) having concave portions (24e1, 25e1) provided at upper and lower portions of the guide members (24, 25) and the vertical columnar guide portions (24d, 25d) are positioned by being brought into contact with wing guides (43, 44) provided on the head drum side.

8. A cassette according to claim 1 wherein the tape guide members (24, 25) are rotatably mounted by means of bearing brackets (24g. 25g) having shaft apertures (24g1, 25g1) engaged with shafts (131, 132) mounted on the inner surface of the cassette casing (1), the bearing brackets (24g, 25g) being formed on rear surface sides of the guide surfaces (24c, 25c) of the tape guide members (24, 25).

9. A cassette according to claim 8 wherein the bearing brackets (24g, 25g) provided on the tape guide members (24, 25) have shaft apertures (24g1, 25g1) elongated to left and right as seen from the front surface of the opening (5) of the cassette casing (1) and are engaged with the shafts (131, 132) mounted on the inner surface of the cassette casing (1) so that the tape guides (24, 25) can be moved in the left and right direction more freely than in the front to back direction.

10. A cassette according to claim 8 wherein the bearing brackets (24g, 25g) provided on the tape guide members (24, 25) have substantially at the centres of inner peripheral surfaces of the shaft apertures (24g1, 25g1) protruded shaft supporting edges (24g2, 25g2) and the protruded shaft supporting edges are engaged with the shafts (131, 132) on the inner surface of the cassette casing (1) so that the tape guide members (24, 25) can be swung freely.

11. A cassette according to claim 1 wherein a spring (135, 136) is interposed between one portion of a rear surface of the tape guide members (24, 25) and a supporting portion (130) on the inner surface of the cassette casing (1) to spring-bias the tape guide members (24, 25) so that the tape guide members (24, 25) can be rotated about the bearing brackets (24g, 25g).

12. The use of a cassette according to any one of claims 1 to 11 for recording and/or reproducing a digital signal.

## Patentansprüche

1. Magnetbandkassette, bei der an der Vorderseite eines Kassettengehäuses (1) eine Öffnung (5) gebildet ist, in die eine Kopftrommel (42) eingeführt werden kann, ein auf Spulenkernen (7, 8) aufgewickeltes und im Kassettengehäuse (1) untergebrachtes bandförmiges Aufzeichnungsmedium (T) schraubenförmig um die Kopftrommel (42) geschlungen wird, wenn diese in die Öffnung (5) eingeführt wird, und von einem an der Kopftrommel (42) angebrachten Drehkopf (41) eine Schrägspuraufzeichnung und/oder -wiedergabe ausgeführt wird, wobei die Magnetbandkassette zwei Bandführungselemente (24, 25) umfaßt, die separat in der Öffnung (5) des Kassettengehäuses (1) angebracht sind, um das Aufzeichnungsmedium (T) so zu führen, daß es schraubenförmig um die Kopftrommel (42) geschlungen wird,
dadurch gekennzeichnet,
daß die beiden Bandführungselemente (24, 25) drehbar im Kassettengehäuse angebracht sind, gekrümmte vorstehende Halte-Randabschnitte (24a, 24b, 25a, 25b) aufweisen, die beim Einführen der Kopftrommel (42) in die Öffnung (5) mit dem Umfang der Kopftrommel (42) in Berührung gelangen, und in seitlicher Richtung geschwenkt und bewegt werden können.

2. Kassette nach Anspruch 1, bei der die beiden Bandführungselemente (24, 25) bögenförmige Bandführungsflächen (24c, 25c) aufweisen, die der Umfangsfläche der Kopftrommel (42) entsprechen.

3. Kassette nach Anspruch 2, bei der die bögenförmigen Bandführungsflächen (24c, 25c) der beiden Bandführungselemente (24, 25) mit schrägen Flächen (24c, 25c), die in entgegengesetzte Richtungen geneigt sind, gebildet sind.

4. Kassette nach Anspruch 2, bei der die vorstehenden Halte-Randabschnitte (24a, 24b, 25a, 25b) der beiden Bandführungselemente (24, 25) am oberen und unteren Abschnitt der Bandführungsflächen (24c, 25c) in einem Abstand gebildet sind, der größer ist als die Breite des Aufzeichnungsmediums (T).

5. Kassette nach Anspruch 4, bei der die beiden Bandführungselemente (24, 25) an den vorderen Enden der Öffnung (5) des Kassettengehäuses (1) Aufnahme-Randabschnitte (24a1, 25a1) aufweisen, die an die vorstehenden Halte-Randabschnitte (24a, 24b, 25a, 25b) angrenzen, wodurch die Kopftrommel (42) geführt wird.

6. Kassette nach Anspruch 1, bei der die beiden Bandführungselemente (24, 25) an den vorderen Enden der Öffnung (5) des Kassettengehäuses (1) und ihrer linken und rechten Position mit vertikalen säulenförmigen Führungsabschnitten (24d, 25d) zum Einführen und Auswerfen des Aufzeichnungsmediums (T) versehen sind.

7. Kassette nach Anspruch 6, bei der die vertikalen säulenförmigen Führungsabschnitte (24d, 25d) an den Endabschnitten der Öffnung (5) des Kassettengehäuses (1) Aufnahme-Randabschnitte (24al, 25a1) mit an oberen und unteren Abschnitten der Führungselemente (24, 25) vorgesehenen konkaven Abschnitten (24e1, 25e1) aufweisen und die vertikalen säulenförmigen Führungsabschnitte (24d, 25d) dadurch positioniert werden, daß sie mit an der Kopftrommel (42) vorgesehenen seitlichen Führungen (43, 44) in Berührung gebracht werden.

8. Kassette nach Anspruch 1, bei der die Bandführungselemente (24, 25) mittels Halteklammern (24g, 25g) mit Stiftöffnungen (24g1, 24g1), in die auf der Innenseite des Kassettengehäuses (1) angebrachte Stifte (131, 132) eingreifen, drehbar angebracht sind, wobei die Halteklammern (24g, 25g) auf der Rückseite der Führungsflächen (24c, 25c) der Bandführungselemente (24, 25) gebildet sind.

9. Kassette nach Anspruch 8, bei der die an den Bandführungselementen (24, 25) vorgesehenen Halteklammern (24g, 25g) Stiftöffnungen (24g1, 24g1) aufweisen, die von der Vorderseite der Öffnung (5) des Kassettengehäuses (1) aus gesehen nach links und rechts verlängert sind und sich in Eingriff mit auf der Innenseite des Kassettengehäuses (1) angebrachten Stiften (131, 132) befinden, so daß sich die Bandführungselemente (24, 25) mehr nach links und rechts als nach vorne und hinten bewegen lassen.

10. Kassette nach Anspruch 8, bei der die an den Bandführungselementen (24, 25) vorgesehenen Halteklammern (24g, 25g) im wesentlichen in der Mitte der Innenfläche der Stiftöffnungen (24g1, 24g1) vorstehende Stifthalteränder (24g2, 25g2) aufweisen und die vorstehenden Stifthalteränder (24g2, 25g2) sich in Eingriff mit den auf der Innenseite des Kassettengehäuses (1) angebrachten Stiften (131, 132) befinden, so daß sich die Bandführungselemente (24, 25) frei schwenken lassen.

11. Kassette nach Anspruch 1, bei der zwischen einem Abschnitt der Rückseite der Bandführungselemente (24, 25) und einer Halterung (130) auf der Innenseite des Kassettengehäuses (1) eine Feder (135, 136) eingesetzt ist, um die Bandführungselemente (24, 25) so federvorzubelasten, daß sie sich um die Halteklammern (24g, 25g) drehen lassen.

12. Verwendung einer Kassette nach einem der Ansprüche 1 bis 11 zum Aufzeichnen und/oder Wiedergeben eines digitalen Signals.

## Revendications

1. Cassette de bande magnétique dans laquelle une ouverture (5) est formée sur le côté de la surface frontale d'un boîtier de cassette (1), dans laquelle on peut introduire un tambour à tête (42), un support d'enregistrement en forme de bande (T) enroulé autour de moyeux de bobine (7, 8) et abrité dans le boîtier de cassette (1) étant enroulé en hélice autour du tambour à tête (42) lorsque celui-ci est introduit à l'intérieur de l'ouverture (5), et un enregistrement et/ou une lecture est effectué suivant un balayage en hélice par une tête rotative (41) montée sur le tambour à tête (42), la cassette de bande magnétique comprenant une paire d'éléments guide-bandes (24, 25) prévus indépendamment à l'intérieur de l'ouverture (5) du boîtier de cassette (1) afin de guider le support d'enregistrement (T) de telle manière que le support d'enregistrement (T) est enroulé en hélice autour du tambour à tête (42) ; caractérisée en ce que la paire d'éléments guide-bandes (24, 25) sont montés en rotation sur le boîtier de cassette, en ce qu'ils comportent des parties de bordure de supportage (24a, 24b, 25a, 25b) incurvées en saillie, qui viennent en contact circonférentiel avec le tambour à tête (42) lors de l'introduction du tambour à tête à l'intérieur de l'ouverture (5), et qui peuvent être basculées et déplacées dans la direction latérale.

2. Cassette selon la revendication 1, dans laquelle la paire d'éléments guide-bandes (24, 25) présentent des surfaces guide-bandes en forme d'arcs (24c, 25c) qui correspondent à la surface circonférentielle du tambour à tête (42).

3. Cassette selon la revendication 2, dans laquelle les surfaces guide-bandes en forme d'arc (24c, 25c) de la paire d'éléments guide-bandes (24, 25) sont formées avec des surfaces inclinées (24c, 25c), qui sont inclinées dans des directions respectivement opposées.

4. Cassette selon la revendication 2, dans laquelle les parties de bordure de supportage en saillie (24a, 24b, 25a, 25b) de la paire d'éléments guide-bandes (24, 25) sont prévues sur la partie supérieure et la partie inférieure des surfaces guide-bandes (24c, 25c) avec un espacement qui est plus large que la largeur du support d'enregistrement (T).

5. Cassette selon la revendication 4, dans laquelle la paire d'éléments guide-bandes (24, 25) présentent aux extrémités frontales de l'ouverture (5) du boîtier de cassette (5) les parties de bordure de réception (24a1, 25a1) contiguës aux parties de bordure de support en saillie (24a, 24b, 25a, 25b), afin de guider grâce à ceci le tambour à tête (42).

6. Cassette selon la revendication 1, dans laquelle la paire d'éléments guide-bandes (24, 25) sont pourvus aux extrémités frontales de l'ouverture (5) du boîtier de cassette (1) et à leurs positions à gauche et à droite de parties de guidage verticales en forme de colonnes (24d, 25d) pour introduire et pour éjecter le support d'enregistrement (T).

7. Cassette selon la revendication 6, dans laquelle les parties de guidage verticales en forme de colonnes (24d, 25d) présentent, aux parties terminales de l'ouverture (5) du boîtier de cassette (1), des parties de bordure de réception (24a1, 25a1) présentant des parties concaves (24e1, 25e1) prévues à la partie supérieure et à la partie inférieure des éléments guide-bandes (24, 25), et en ce que les parties de guidage verticales en forme de colonnes (24d, 25d) sont positionnées en étant amenées en contact avec des guides à ailettes (43, 44) prévus du côté du tambour à tête.

8. Cassette selon la revendication 6, dans laquelle les éléments guide-bandes (24, 25) sont montés en rotation au moyen de platines de support (24g, 25g) ayant des ouvertures d'arbre (24g1, 25g1) engagées avec des arbres (131, 132) montés sur la surface intérieure du boîtier de cassette (1), les platines de support (24g, 25g) étant formées sur les côtés de surface arrière des surfaces de guidage (24c, 25c) des éléments guide-bandes (24 25).

9. Cassette selon la revendication 8, dans laquelle les platines de support (24g, 25g) prévues sur les éléments guide-bandes (24, 25) présentent des ouvertures d'arbre (24g1, 25g1) allongées vers la gauche et vers la droite, vues depuis la surface frontale de l'ouverture (5) du boîtier de cassette (1), et sont engagées avec les arbres (131, 132) montés sur la surface intérieure du boîtier de cassette (1) de telle sorte que les guide-bandes (24, 25) peuvent être déplacés dans la direction gauche/droite plus librement que dans la direction avant/arrière.

10. Cassette selon la revendication 8, dans laquelle les platines de support (24g, 25g) prévues sur les éléments guide-bandes (24, 25) présentent, sensiblement aux centres de surfaces périphériques intérieures des ouvertures d'arbre (24g1, 25g1), des bordures en saillie pour le supportage des arbres (24g2, 25g2), et en ce que les bordures en saillie pour le supportage des arbres sont engagées avec les arbres (131, 132) sur la surface intérieure du boîtier de cassette (1), de telle sorte que les éléments guide-bandes (24, 25) peuvent être basculés librement.

11. Cassette selon la revendication 1, dans laquelle un ressort (135, 136) est interposé entre une partie d'une surface arrière des éléments guide-bandes (24, 25) et une partie de support (130) sur la surface intérieure du boîtier de cassette (1) afin de solliciter élastiquement les éléments guide-bandes (24, 25) de telle sorte que les éléments guide-bandes (24, 25) peuvent être tournés autour des platines de support (24g, 25g).

12. Utilisation d'une cassette selon l'une quelconque des revendications 1 à 11, pour l'enregistrement et/ou la reproduction d'un signal numérique.
